# FASCICULE DE BREVET EUROPEEN

(11) **EP 0 485 307 B1**
(45) Date de publication et mention de la délivrance du brevet: **13.12.1995**
(21) Numéro de dépôt: 91420371.6
(22) Date de dépôt: 21.10.1991
(51) Int. Cl.: B29C 39/18, B29C 41/30, B29C 43/28, B29C 45/14, B41M 5/00

(54) **Procédé et dispositif pour le dépôt d'une couche de peinture réactive au laser sur une pièce moulée**
Verfahren und Vorrichtung zum Anbringen einer laserreaktiven Farbstoffschicht auf einen geformten Gegenstand
Method and apparatus for the deposit of a layer of laser reactive paint upon a moulded object

(30) Priorité: 08.11.1990 FR 9014015
(43) Date de publication de la demande: 13.05.1992
(73) Titulaire: SCHNEIDER ELECTRIC SA, 92100 Boulogne Billancourt (FR)
(72) Inventeur: Buisson, Jacques, F-38050 Grenoble Cédex (FR); Izoard, Jean, F-38050 Grenoble Cédex (FR)
(74) Mandataire: Hecké, Gérard

(56) Documents cités:
- EP-A- 0 171 219
- EP-A- 0 419 377
- US-A- 2 619 679
- US-A- 4 369 157
- US-A- 4 917 927
- PATENT ABSTRACTS OF JAPAN vol. 13, no. 400 (M-867)(3748) 6 Septembre 1989 & JP-A-1 145 114 (MEIKI CO LTD) 7 Juin 1989

## Description

L'invention est relative à un procédé d'application automatique sur une pièce en matière plastique moulée d'une couche de peinture réactive à un rayon laser, l'épaisseur de la couche devant être suffisante pour permettre des inscriptions par l'action d'un rayon laser en fin d'une chaîne de fabrication flexible.

Les procédés usuels d'application de peinture, utilisables sur les chaînes de fabrication, notamment la tampographie, sont limités à des dépôts de quelques microns et une épaisseur suffisante nécessite des dépôts successifs qui sont, soit réalisés au même poste avec une réduction importante de la cadence, soit en des postes successifs avec un allongement de la chaîne de fabrication.

Le document US-A-4 369 157 décrit un procédé d'application d'une couche de peinture sur une pièce en matière plastique moulée selon lequel un ruban de transfert portant ladite couche est introduit dans l'empreinte du moule, de façon à disposer celle-ci en regard de la face de la pièce devant recevoir par la suite l'inscription et à engendrer, lors de la coulée de la pièce, le transfert de cette couche de peinture sur ladite face, le ruban est avance d'un pas après ouverture du moule et éjection de la pièce coulée, pour amener une nouvelle couche de peinture dans le moule en regard de ladite face.

Le document EP-A-419.377, appartenant à l'état de la technique tel que défini à l'Art. 54, paragraphe 3, de la CBE, concerne un dispositif de marquage laser de boîtiers moulés en matière plastique, intégré à une chaîne de fabrication flexible d'appareils électriques. La chaîne comporte un poste d'application d'une couche de peinture réactive au laser sur la surface de marquage, suivi du poste de marquage au rayon laser. La vitesse d'inscription permet de suivre la cadence de la chaîne de production, bien que la qualité de l'écriture implique une épaisseur notable de la couche de peinture, par example supérieure à 15 microns.

Le transfert peut être effectué dans le moule d'injection du boîtier plastique. Le moule comporte un dispositif de déroulement d'un ruban sur lequel on a précédemment déposé une ou deux couches de peinture. Les empreintes du moule sont fermées directement sur le ruban qui résiste à la température d'injection de la matière plastique. Par contre, la peinture vient en contact avec la matière qui la fait fondre et qui forme une carapace dans la zone recherchée. L'avancement pas à pas du ruban est lié au système de fermeture du moule.

La présente invention a pour but de réaliser un procédé d'application d'une couche de peinture réactive au laser compatible avec une chaîne de fabrication automatique en série de pièces moulées.

Ce but est atteint avec le procédé selon la revendication 1.

La chaîne de montage ou de fabrication ne comporte plus de poste d'application de la peinture réactive au laser et est donc plus simple, et cette application intervient lors de l'injection de la pièce sans nécessiter un poste ou une installation séparée ou une reprise quelconque des pièces.

Une caractéristique importante de l'invention est que le ruban de transfert est associé à un tiroir du moule pour réaliser le dépôt de peinture sur une face de la pièce qui ne coïncide pas avec le plan de joint du moule. Le tiroir est agencé en cassette de stockage du ruban, dont l'avance après chaque moulage est commandée automatiquement pour introduire dans le moule un nouveau tronçon de ruban, dont la couche de peinture est transférée sur la pièce lors du moulage suivant. Le mouvement du tiroir et l'avance du ruban sont dérivés du mouvement de la partie mobile du moule, l'avance du ruban intervenant, bien entendu, pendant l'ouverture du moule. La bobine d'enroulement du ruban est par exemple entraînée en rotation intermittente par une roue à rochet, tandis que la bobine de déroulement du ruban est simplement freînée pour assurer la tension du ruban. La cassette est facilement amovible.

L'invention s'applique plus particulièrement à la fabrication de disjoncteurs électriques, dont le boîtier en matière plastique moulée comporte deux coquilles accolées avec inscription des paramètres du disjoncteur sur la petite face frontale du boîtier, perpendiculaire à la grande face, qui correspond au plan de joint du moule. Le ruban défile perpendiculairement à ce plan de joint, en appui de la face frontale du tiroir qui confine l'empreinte du moule. Le tiroir coulisse parallèlement au plan de joint, c'est à dire perpendiculairement au déplacement de la partie mobile du moule.

L'invention est également relative à un moule pour la mise en oeuvre du procédé précité d'application de la couche de peinture, lequel moule comporte un tiroir agencé en cassette de stockage du ruban transfert. L'emploi du tiroir permet un marquage sur une face de la pièce qui est différente de celle définie par le plan de joint du moule, le ruban de transfert restant plaqué sur la face frontale du tiroir qui confine l'empreinte du moule.

D'autres avantages et caractéristiques ressortiront plus clairement de la description qui va suivre, d'un mode de réalisation de l'invention, donné à titre d'exemple non limitatif, et représenté aux dessins annexés dans lesquels:

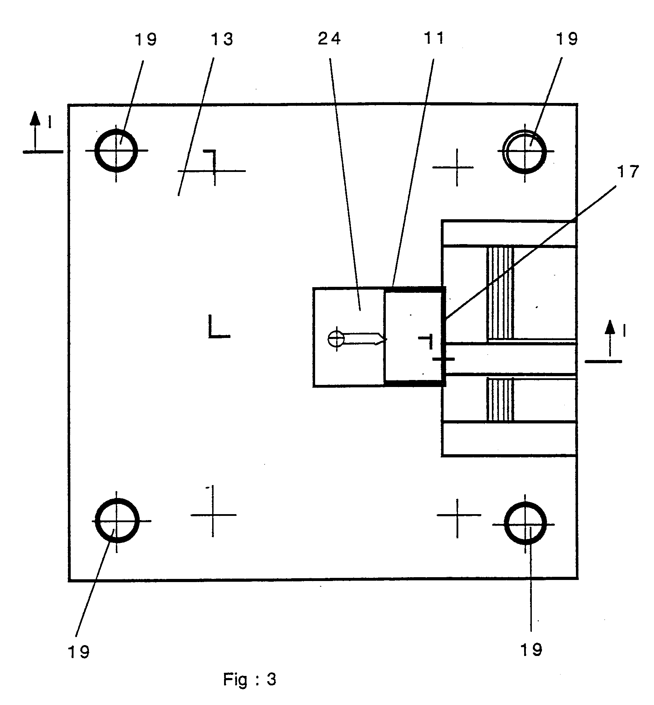

La figure 1 est une coupe suivant la ligne I-I de la figure 3, du moule selon l'invention, représenté en position fermé;
La figure 2 est une vue analogue à celle de la figure 1, montrant le moule ouvert et la pièce éjectée;
La figure 3 est une vue en plan de la partie mobile du moule selon la figure 1, la cassette étant supposée enlevée;

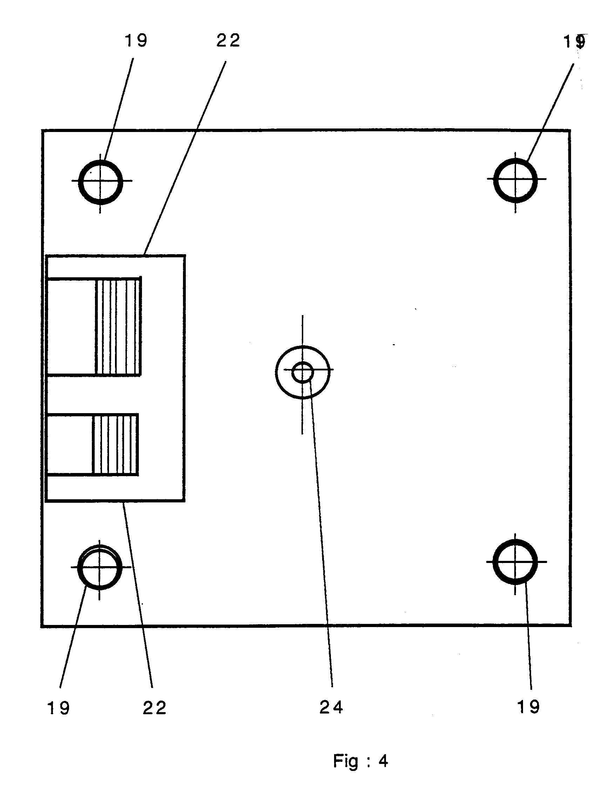

La figure 4 est une vue de dessous de la partie fixe du moule selon la figure 1.

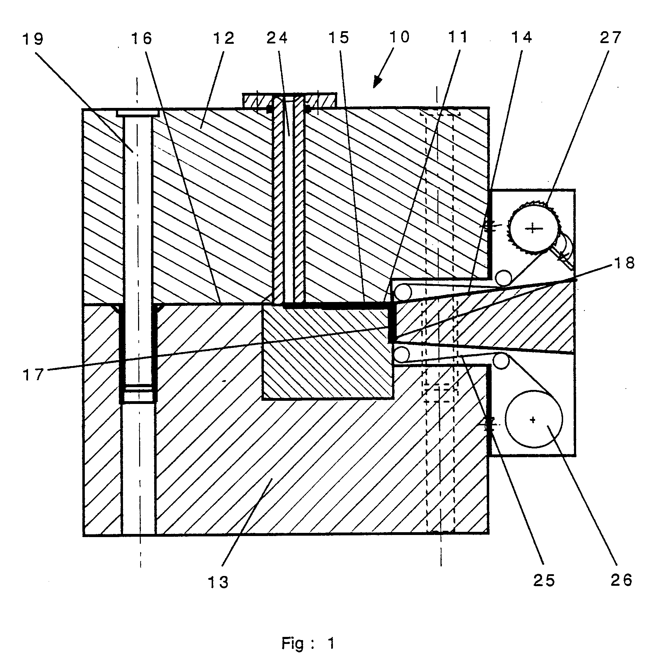

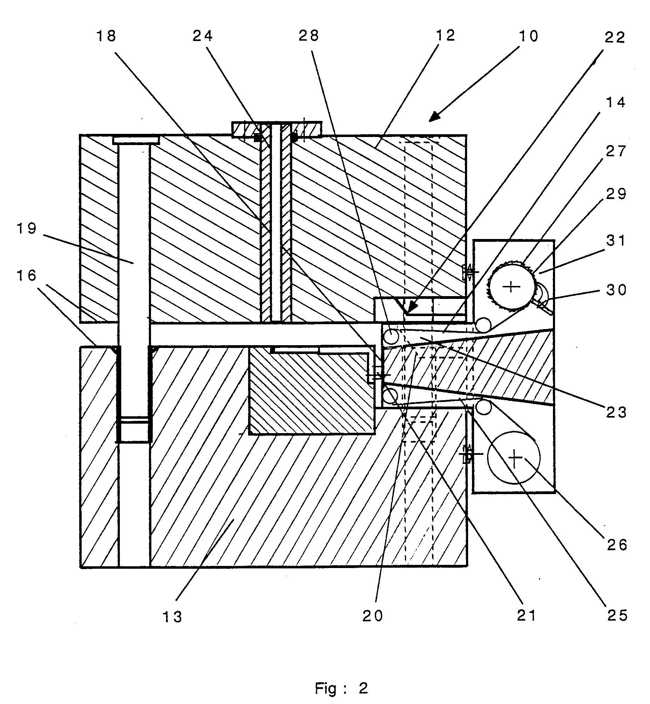

Sur les figures, un moule 10 d'un boîtier 11 d'un appareillage électrique, notamment d'un boîtier moulé d'un disjoncteur miniature, est constitué d'une partie fixe 12, une partie mobile 13 et un tiroir 14. La pièce 11 comporte dans l'exemple représenté, une grande face 15 coïncidant avec le plan de joint 16 du moule 10, et une petite face 17 perpendiculaire à ce plan de joint 16, et coïncidant avec la face frontale 18 du tiroir 14. La partie mobile 13 peut coulisser perpendiculairement au plan de joint 16 en étant guidée par des colonnes 19, respectivement pour fermer et ouvrir le moule 10. Le tiroir 14 est monté semi-fixe sur la partie mobile 13 par des vis 20 avec interposition de rondelles élastiques 21, qui sollicitent le tiroir 14 en position écartée de la partie mobile 13. Le mouvement relatif du tiroir 14 est perpendiculaire à celui de la partie mobile 13 et ce mouvement est limité. La partie fixe 12 porte une came 22 qui coopère en fin de course de fermeture du moule 10 avec une butée 23 du tiroir 14 pour déplacer ce dernier à l'encontre de la force de rappel des rondelles 21, en position de fermeture représentée sur la figure 1. Lors du mouvement inverse d'ouverture du moule, le tiroir 14 se déplace sous l'action des rondelles élastiques 21, en position écartée représentée à la figure 2.

Le moule 10 étant fermé, la matière plastique est injectée par des conduits 24 dans l'empreinte du moule pour le moulage de la pièce 11, d'une manière bien connue des spécialistes, et le moule comporte des conduits de refroidissement et des éjecteurs de la pièce 11 au cours de l'ouverture du moule.

Le tiroir 14 est agencé en cassette de stockage d'un ruban de transfert 25. A cet effet, la cassette 14 comporte une bobine 26 de déroulement du ruban 25, et une bobine 27 d'enroulement de ce ruban 25. Le ruban 25 est guidé par des galets de renvoi 28 en passant devant la face frontale 18 du tiroir 14. Le ruban de transfert 25 porte sur l'une de ses faces orientées du côté de l'empreinte du moule 10 une couche de peinture, qui lors du moulage de la pièce 11 est transférée sur cette dernière, de la manière décrite par la suite. La bobine d'enroulement 27 du ruban 25 est entraînée en rotation après chaque opération de moulage pour déplacer le ruban 25 d'un pas correspondant à la surface de marquage, en l'occurrence à la hauteur de la petite face 17 de la pièce 11. Le mouvement d'entraînement en rotation de la bobine 27 est dérivé du mouvement de la partie mobile 13 du moule 10, par exemple de la manière schématiquement représentée par un système de levier 29, portant un cliquet 30 d'entraînement d'une roue à rochet 31 solidaire de la bobine 27. Lors de la fermeture du moule 10, le levier 29 coopère avec une pièce conjuguée (non représentée) de la partie fixe 12 et pivote pour entraîner en rotation la bobine 27. Tout autres type d'entraînement de la bobine 27 peut bien entendu être utilisé, et le déroulement du ruban 25 est freîné par un frein (non représenté) coopérant avec la bobine de déroulement 26. De telles cassettes à avancement pas à pas du ruban 25 sont bien connues, notamment dans le domaine de la photographie. L'avancement du ruban 25 intervient avant la fermeture totale du moule 10, le tiroir ou cassette 14 étant encore écarté des parties 12,13 du moule. Après la fermeture du moule 10, le ruban 25 est plaqué sur les parties 12,13 et la face du ruban portant la couche de peinture confine la partie de l'empreinte du moule correspondant à la petite face 17 de la pièce 11. Lors de la coulée de la matière plastique, cette couche de peinture est transférée du ruban 25 sur la pièce 11 et elle vient s'appliquer sur la face 17, en regard du ruban 25. L'application de la couche de peinture sur la pièce 11 intervient pendant la coulée de cette dernière, et ce procédé permet l'application d'une couche relativement épaisse, par exemple de plusieurs dizaines de microns sans nécessiter une opération ou un poste d'application spécial.

La réalisation du moule 10 ne pose pas de problème particulier, l'adjonction du tiroir ou de la cassette 14, dont le mouvement est limité à une distance permettant l'avancement du ruban 25, étant relativement simple. Dans l'exemple décrit, la couche de peinture est appliquée sur une face perpendiculaire au plan de joint 16 du moule 10, mais il est clair que le tiroir 14 peut être disposé en regard d'une face différente, ou que plusieurs tiroirs permettent l'application de couches de peinture en différents emplacements de la pièce 11. Il est inutile de décrire plus en détail le procédé d'injection ou le moule, qui sont d'un type standard.

La pièce moulée 11, portant sur la face de marquage 17, la couche de peinture est par la suite transférée à une chaîne de montage ou de fabrication, où sont mis en place les différents composants en des postes de travail successifs. En bout de la chaîne de fabrication flexible, est disposé un poste de marquage par gravure au faisceau laser, piloté par l'automate ou le système informatique de la chaîne de fabrication. L'application d'une couche de peinture sur la zone de marquage permet de s'affranchir du matériau plastique du boîtier, et de réaliser des inscriptions très nettes et distinctives. L'application de la couche de peinture réactive au laser lors du moulage de la pièce, permet une simplification notable de la chaîne de fabrication sans compliquer la réalisation du boîtier.

Il est inutile de positionner avec précision le ruban de transfert dans le moule, et le système de cassette et tiroir est donc relativement simple.

## Revendications

1. Procédé d'application automatique sur une pièce (11) en matière plastique moulée d'une couche de peinture réactive à un rayon laser, l'épaisseur de la couche étant suffisante pour permettre des inscriptions par l'action d'un rayon laser en fin d'une chaîne de fabrication flexible, selon lequel un ruban (25) de transfert portant ladite couche de peinture est introduit dans l'empreinte du moule (10), de façon à disposer celle-ci en regard de la face (17) de la pièce (11) devant recevoir par la suite l'inscription et à engendrer, lors de la coulée de la pièce, le transfer de cette couche de peinture sur ladite face (17), le ruban (25) est avancé d'un pas après ouverture du moule (10) et éjection de la pièce coulée (11), pour amener une nouvelle couche de peinture dans le moule (10) en regard de ladite face (17), et selon lequel on fait défiler ledit ruban (25) le long d'un tiroir (14) constituant la paroi du moule (10) en regard de ladite face (17) pour amener successivement les couches de peinture dans ledit moule (10) en regard de ladite face (17).

2. Procédé selon la revendication 1, caractérisé en ce que ledit tiroir (14) est agencé en cassette ayant des bobines (26,27) de stockage dudit ruban (25).

3. Moule pour la mise en oeuvre du procédé selon l'une des revendications 1 à 2, ayant une partie fixe (12) et une partie mobile (13) définissant en position fermée du moule un plan de joint (16) et un tiroir mobile (14) du côté externe du moule (10), ledit tiroir (14) étant agencé en cassette de défilement d'un ruban (25) portant une couche de peinture, ledit ruban (25) coiffant la face du tiroir (14) qui confine l'empreinte du moule.

4. Moule selon la revendication 3, caractérisé en ce que ladite face du tiroir (14) s'étend perpendiculairement audit plan de joint (16) et que le mouvement dudit tiroir (14) est perpendiculaire au mouvement de ladite partie mobile (13) du moule (10).

5. Moule selon les revendications 3 ou 4, caractérisé en ce que ledit tiroir (14) est monté à coulissement sur la partie mobile (13) du moule.

6. Moule selon l'une des revendications 3, 4 ou 5, caractérisé en ce que le mouvement du tiroir (14) est dérivé du mouvement de la partie mobile (13) du moule pour insérer le tiroir (14) lors de la fermeture du moule et le rétracter lors de l'ouverture du moule.

7. Moule selon l'une des revendications 3, 4, 5 ou 6, caractérisé en ce qu'il comporte un mécanisme (29,30,31) d'avancement du ruban (25) actionné automatiquement lors de la manoeuvre de la partie mobile (13) du moule pour avancer le ruban (25) d'un pas et amener une nouvelle couche de peinture dans le moule après chaque coulée.

8. Moule selon l'une des revendications 3, 4, 5, 6 ou 7, caractérisé en ce que ladite cassette (14) est facilement amovible du moule.

## Claims

1. A process for automatic application on a moulded plastic part (11) of a coat of paint reactive to a laser beam, the thickness of the layer being sufficient to enable inscriptions by the action of a laser beam at the end of a flexible manufacturing line, whereby a transfer ribbon (25) bearing said coat of paint is introduced into the print of the mould (10) so as to arrange the latter facing the face (17) of the part (11) which is subsequently to receive the inscription and to bring about the transfer of this coat of paint to said face (17) when the part is cast, the ribbon (25) being advanced one step after opening of the mould (10) and ejection of the cast part (11), to bring a new coat of paint into the mould (10) facing said face (17), according to which said ribbon (25) runs along a slide rack (14) forming the wall of the mould (10) facing said face (17), and successively supplies the coats of paint to said mould (10) facing said face (17).

2. The process according to claim 1, characterized in that said slide rack (14) is arranged as a cassette having bobbins (26, 27) for storing said ribbon (25).

3. A mould for implementation of the process according to either of the claims 1 or 2, having a fixed part (12) and a movable part (13) defining in the closed position of the mould a joint face (16) and a movable slide rack (14) on the external side of the mould (10), said slide rack (14) being arranged as a cassette for running of a ribbon (25) bearing a coat of paint, said ribbon (25) capping the face of the slide rack (14) which confines the print of the mould.

4. The mould according to claim 3, characterized in that said face of the slide rack (14) extends perpendicularly to said joint face (16) and that the movement of said slide rack (14) is perpendicular to the movement of said movable part (13) of the mould (10).

5. The mould according to claim 3 or 4, characterized in that said slide rack (14) is slidingly mounted on the movable part (13) of the mould.

6. The mould according to one of the claims 3, 4 or 5, characterized in that the movement of the slide rack (14) is derived from the movement of the movable part (13) of the mould to insert the slide rack (14) when the mould is closed and to retract it when the mould is opened.

7. The mould according to one of the claims 3, 4, 5 or 6, characterized in that it comprises a mechanism (29, 30, 31) for advancing the ribbon (25) actuated automatically when operation of the movable part (13) of the mould takes place to advance the ribbon (25) one step and bring a new coat of paint into the mould after each casting.

8. The mould according to one of the claims 3, 4, 5, 6 or 7, characterized in that said cassette (14) is easily removable from the mould.

## Patentansprüche

1. Verfahren zum automatischen Auftragen einer laserempfindlichen Farbschicht auf ein Kunststoff-Spritzgußteil (11) mit einer ausreichenden Farbschichtdicke, um Beschriftungen mit Hilfe eines Laserstrahls am Ende der Fertigungsanlage zu ermöglichen, bei dem ein als Träger für die genannte Farbschicht dienendes Farbübertragungsband (25) so in das Formwerkzeug (10) eingeführt wird, daß diese Farbschicht der anschließend zu beschriftenden Fläche (17) des Teils (11) zugewandt ist und während des Spritzgießens des Teils auf die genannte Fläche (17) übertragen wird, wobei das Farbübertragungsband (25) nach dem Öffnen des Formwerkzeugs (10) und dem Ausdrücken des fertigen Spritzgußteils (11) um einen Taktschritt weiterbewegt wird, um eine neue Farbschicht im Formwerkzeug (10) gegenüber der genannten Fläche (17) bereitzustellen, und das genannte Farbübertragungsband (25) an einem, die der genannten Fläche (17) gegenüberliegende Wand des Formwerkzeugs (10) bildenden Vorsatzschieber (14) entlanggeführt wird, um die einzelnen Farbschichten im genannten Formwerkzeug gegenüber der genannten Fläche (17) nacheinander bereitzustellen.

2. Verfahren nach Anspruch 1, dadurch gekennzeichnet, daß der genannte Vorsatzschieber (14) als Kassette mit Spulen (26, 27) zur Aufnahme des genannten Farbübertragungsbands (25) ausgeführt ist.

3. Formwerkzeug zur Anwendung des Verfahrens gemäß einem der Ansprüche 1 bis 2 mit einem feststehenden Teil (12) und einem beweglichen Teil (13), die in der geschlossenen Stellung des Formwerkzeugs eine Schließebene (16) bilden, sowie einem an der Außenseite des Formwerkzeugs (10) angeordneten beweglichen Vorsatzschieber (14), der als Kassette zum Transport eines, eine Farbschicht tragenden Farbübertragungsbands (25) ausgeführt ist, wobei das genannte Farbübertragungsband (25) die das Formwerkzeug verschließende Seite des Vorsatzschiebers (14) abdeckt.

4. Formwerkzeug nach Anspruch 3, dadurch gekennzeichnet, daß die genannte Seite des Vorsatzschiebers (14) rechtwinklig zur genannten Schließebene (16) verläuft und daß die Bewegung des genannten Vorsatzschiebers senkrecht zur Bewegung des genannten beweglichen Teils (13) des Formwerkzeugs (10) erfolgt.

5. Formwerkzeug nach Anspruch 3 oder 4, dadurch gekennzeichnet, daß der genannte Vorsatzschieber (14) gleitend auf dem beweglichen Teil (13) des Formwerkzeugs gelagert ist.

6. Formwerkzeug nach Anspruch 3, 4 oder 5, dadurch gekennzeichnet, daß für die Bewegung des Vorsatzschiebers (14) die Bewegung des beweglichen Teils (13) des Formwerkzeugs genutzt wird, um den Vorsatzschieber (14) beim Schließen des Formwerkzeugs heranzuführen und beim Öffnen des Formwerkzeugs wegzuziehen.

7. Formwerkzeug nach Anspruch 3, 4, 5 oder 6, dadurch gekennzeichnet, daß es einen Mechanismus (29, 30, 31) zum Weitertransport des Farbübertragungsbands (25) umfaßt, der bei der Öffnungsbewegung des beweglichen Teils (13) des Formwerkzeugs automatisch betätigt wird, um das Farbübertragungsband (25) um einen Taktschritt weiterzutransportieren und nach jedem Spritzgießtakt eine neue Farbschicht im Formwerkzeug bereitzustellen.

8. Formwerkzeug nach Anspruch 3, 4, 5, 6 oder 7, dadurch gekennzeichnet, daß die genannte Kassette (14) leicht vom Formwerkzeug abgezogen werden kann.
